# EUROPEAN PATENT APPLICATION

(11) **EP 1 892 265 A1**
(43) Date of publication of application: **27.02.2008**
(21) Application number: 06757048.1
(22) Date of filing: 06.06.2006
(51) Int. Cl.: C08L 23/22, C03C 27/12, C08K 3/00, C08L 53/00, C09K 3/10

(54) **RESIN COMPOSITION**

(30) Priority: 07.06.2005 JP 2005166600
(71) Applicant: Kaneka Corporation, Kita-ku Osaka-shi, Osaka 530-8288 (JP)
(72) Inventor: YAO, Takeshi, Settsu-shi, Osaka 5660072 (JP)
(74) Representative: Vossius & Partner
(86) International application number: PCT/JP2006/311308
(87) International publication number: WO 2006/132233

(57) **Abstract**

The present invention has its object to provide a resin composition excellent in mechanical strength and elasticity and further showing only a slight extent of gravity deformation under high temperature conditions. The invention relates to a resin composition which comprises an isobutylene-based polymer (A), an aromatic vinyl-based thermoplastic elastomer (B) comprising a polymer block (b1) the constituent monomer (s) of which is(are) an aromatic vinyl compound(s) and a polymer block (b2) the constituent monomer(s) of which is(are) an aliphatic hydrocarbon compound (s) other than isobutylene, and a filler (C). This composition can be suitably used as, for example, a sealant, in particular as a hot melt sealant for double glazing units, and as a hot melt spacer material for double glazing units.

## Description

### TECHNICAL FIELD

The present invention relates to a resin composition excellent in mechanical strength and elasticity and further showing low gravity deformability even under high temperature conditions. The invention further relates to a sealant, in particular a hot melt sealant for a double glazing unit or a hot melt spacer for a double glazing unit, each comprising the resin composition.

### BACKGROUND ART

Sealants are widely used in automobiles and building materials as materials to seal joints to secure watertightness and/or airtightness. Sealants are required to provide high levels of airtightness and, in many cases, are required to have such characteristics as high elasticity and high mechanical strength, although the requirements may vary according to the intended use thereof.

Another example among the uses of sealants for building materials is the use thereof in double glazing units. The double glazing unit generally comprises two or more glass panels, with a spacer inserted between two neighboring panels to maintain a given distance between them. In double glazing units, a sealant is applied, for example, between the spacer and each glass panel, and the space between the glass panels is filled with such a gas as dry air, nitrogen, argon or sulfur hexafluoride, whereby such effects as thermal insulation, sound insulation and water condensation prevention, among others.

Double glazing units are variegated in structure and, according to the structure thereof, various sealants are applied in various ways. As such sealants, mention may be made of hot melt adhesives, for instance. In some cases, hot melt spacers are used as the spacers. Known as examples of the double glazing unit in which a hot melt material is used are double glazing units in which the spacer used is a material comprising a thermoplastic resin such as a vinyl chloride resin or an isobutylene polymer-based hot melt butyl with a desiccant incorporated therein (Patent Document 1).

The above-mentioned isobutylene polymer-based hot melt butyl has such characteristics as gas barrier properties ensuring airtightness and watertightness, weather resistance and tackiness and therefore used frequently as a sealant for double glazing units. More specifically, in double glazing units having a structure in which an aluminum spacer containing a desiccant therein is used, the hot melt butyl is used, by the hot melt technique, as a primary sealant for mutually fixing the aluminum spacer and the glass panels or applied, by the hot melt technique, as a secondary sealant to the outside of the aluminum spacer, for instance. In a recent example, a material prepared by incorporating a desiccant in the hot melt butyl is applied as such, by the hot melt technique, to one end of a double glazing unit for use as a thermoplastic resin spacer. In each constitution, the role to be fulfilled by the hot melt butyl is in maintaining the airtightness resulting from the adhesion thereof to the glass panel. Under certain environmental conditions, however, the hot melt butyl may be destructed, deformed or peeled off during a long period of use, with the result that the performance thereof may no longer be maintained and the airtightness may be lost in some cases. Further, problems are sometimes produced by deformations caused by the force of gravity (gravity deformations) under high temperature conditions and insufficiencies of elasticity and mechanical strength, in particular.

Patent Document 1: Japanese Kokai Publication Hei07-17748

### SUMMARY OF THE INVENTION

It is an object of the present invention to provide a resin composition which can be used as a sealant, in particular a hot melt sealant for double glazing units, and as a hot melt spacer material for double glazing units and which is excellent in mechanical strength and elasticity and scarcely undergoes gravity deformations under high temperature conditions.

As a result of intensive investigations made by them, the present inventors have now completed the present invention.

Thus, the invention relates to
a resin composition
which comprises
an isobutylene-based polymer (A),
an aromatic vinyl-based thermoplastic elastomer (B) comprising a polymer block (b1) the constituent monomer (s) of which is (are) an aromatic vinyl compound(s) and a polymer block (b2) the constituent monomer (s) of which is (are) an aliphatic hydrocarbon compound(s) other than isobutylene, and
a filler (C).

In a preferred embodiment, the aromatic vinyl-based thermoplastic elastomer (B) has a number average molecular weight of 30,000 to 300,000.

In a preferred embodiment, the weight ratio (b2)/(b1) between the polymer block (b2) and polymer block (b1) in the aromatic vinyl-based thermoplastic elastomer (B) is 95/5 to 50/50.

In a preferred embodiment, the aromatic vinyl-based thermoplastic elastomer (B) is a styrenic thermoplastic elastomer.

In a further preferred embodiment, the aromatic vinyl-based thermoplastic elastomer (B) comprises at least one species selected from the group consisting of styrene-(ethylene/propylene)-styrene triblock copolymers and styrene-(ethylene/butylene)-styrene triblock copolymers.

The above-mentioned filler (C) preferably comprises at least one species selected from the group consisting of calcium carbonate and carbon black.

Preferably, the above resin composition further comprises a moisture-absorbing compound (D).

The moisture-absorbing compound (D) preferably comprises at least one species selected from the group consisting of silica gel, alumina and zeolite.

The invention further relates to
a sealant which comprises the resin composition mentioned above.

Further, the invention relates to
a hot melt sealant for double glazing units
which comprises the resin composition mentioned above.

Furthermore, the invention relates to
a hot melt spacer for double glazing units
which comprises the resin composition mentioned above.

### DETAILED DESCRIPTION OF THE INVENTION

In the following, the invention is described in detail.

The resin composition according to the invention comprises an isobutylene-based polymer (A), an aromatic vinyl-based thermoplastic elastomer (B) comprising a polymer block (b1) the constituent monomer(s) of which is(are)an aromatic vinyl compound and a polymer block (b2) the constituent monomer(s) of which is(are) an aliphatic hydrocarbon compound(s) other than isobutylene, and a filler (C).

In the composition according to the invention, the isobutylene-based polymer (A) provides hot melt adhesive characteristics. The aromatic vinyl-based thermoplastic elastomer (B) characteristically has rigidity owing to the occurrence of an aromatic vinyl compound-derived block and, as compared with the use of other thermoplastic elastomers, the use thereof is advantageous not only in that the watertightness and airtightness of the composition will not be impaired but also in that the composition will not undergo any gravity deformation under high temperature conditions. Furthermore, the filler (C) provides rigidity.

The isobutylene-based polymer (A) includes many commercial products generally marketed under the name polyisobutylene, polybutene or butyl rubber, for instance. As specific examples, there may be mentioned Exxon's Vistanex (LM-MS, MH, H or MML-80, 100, 120, 140, etc.), Nippon Oil Corporation's Tetrax (3T, 4T, 5T, 6T, etc.) and Polybutene (HV) Himol (4H, 5H, 6H, etc.), BASF's Oppanol (B10, B12, B15, B50, B80, B100, B120, B150, B220, etc.) and Exxon's Butyl (007, 065, 068, 168, 268, 269, 365), among others. For providing sufficient hot melt characteristics, the polymer preferably contains isobutylene-derived constituent units in an amount of not smaller than 50 parts by weight, more preferably not smaller than 80 parts by weight, still more preferably not smaller than 90 parts by weight, per 100 parts by weight of the polymer, although such ranges have no particular restrictive meaning. The monomer other than isobutylene which may be contained in the isobutylene-based polymer (A) is not particularly restricted but may be any of those cationically polymerizable monomer components such as aromatic vinyl compounds, aliphatic olefins, alicyclic alkenes, dienes, vinyl ethers and β-pinene. These may be used singly or two or more of them may be used in combination.

As the aromatic vinyl compounds, there may be mentioned, among others, styrene, o-, m- or p-methylstyrene, α-methylstyrene, β-methylstyrene, 2,6-dimethylstyrene, 2,4-dimethylstyrene, α-methyl-o-methylstyrene, α-methyl-m-methylstyrene, α-methyl-p-methylstyrene, β-methyl-o-methylstyrene, β-methyl-m-methylstyrene, β-methyl-p-methylstyrene, 2,4,6-trimethylstyrene, α-methyl-2,6-dimethylstyrene, α-methyl-2,4-dimethylstyrene, β-methyl-2,6-dimethylstyrene, β-methyl-2,4-dimethylstyrene, o-, m-, or p-chlorostyrene, 2,6-dichlorostyrene, 2,4-dichlorostyrene, α-chloro-o-chlorostyrene, α-chloro-m-chlorostyrene, α-chloro-p-chlorostyrene, β-chloro-o-chlorostyrene, β-chloro-m-chlorostyrene, β-chloro-p-chlorostyrene, 2,4,6-trichlorostyrene, α-chloro-2,6-dichlorostyrene, α-chloro-2,4-dichlorostyrene, β-chloro-2,6-diehlorostyrene, β-chloro-2,4-dichlorostyrene, o-, m-, or p-t-butylstyrene, o-, m-, or p-methoxystyrene, o-, m-, or p-chloromethylstyrene, o-, m-, or p-bromomethylstyrene, silyl-substituted styrene derivatives, indene, vinyl naphthalene and the like. These may be used singly or two or more of them may be used in combination.

As the aliphatic olefins, there may be mentioned ethylene, propylene, 1-butene, 2-methyl-1-butene, 3-methyl-1-butene, pentene, hexene, 4-methyl-1-pentene and octene, among others. As the alicyclic alkenes, there may be mentioned cyclohexene, vinylcyclohexane and norbornene, among others. These may be used singly or two or more of them may be used in combination.

As the diene compounds, there may be mentioned, among others, butadiene, isoprene, hexadiene, cyclopentadiene, cyclohexadiene, dicyclopentadiene, divinylbenzene, ethylidenenorbornene and the like. These may be used singly or two or more of them may be used in combination.

As the vinyl ethers, there may be mentioned methyl vinyl ether, ethyl vinyl ether, (n- or iso-)propyl vinyl ether, (n-, sec-, tert- or iso-)butyl vinyl ether, methyl propenyl ether and ethyl propenyl ether, among others. These may be used singly or two or more of them may be used in combination.

The number average molecular weight of the isobutylene-based polymer (A) is not particularly restricted but preferably is 1,000 to 300,000, in particular 10,000 to 100,000.

The number average molecular weight, so referred to herein, of each polymer is the value determined on the polystyrene equivalent basis by gel permeation chromatography (GPC) using, for example, a Waters GPC system (column: Showa Denko's Shodex K-804 (polystyrene gel), mobile phase: chloroform).

The aromatic vinyl compound(s) constituting the polymer block (b1) in the aromatic vinyl-based thermoplastic elastomer (B) is (are) not particularly restricted but includes or include those compounds enumerated hereinabove referring to the aromatic vinyl compounds.

The polymer block (b1) the constituent monomer(s) of which is(are) an aromatic vinyl compound(s) may or may not contain units derived from another monomer or other monomers different from the aromatic vinyl compound(s). When the block (b1) contains some other monomer (s) different from the aromatic vinyl compound(s), the aromatic vinyl compound-derived monomer units in the whole polymer block (b1) preferably amounts to at least 60% by weight, more preferably at least 80% by weight, so that the gravity deformation possibility under high temperature conditions may be satisfactorily reduced. When the aromatic vinyl compound-derived monomer unit content in the whole polymer block (b1) is lower than 60% by weight, the cohesive force of the polymer block will unfavorably become reduced. The monomer(s) other than the aromatic vinyl compound (s) is (are) not particularly restricted but may be any monomer copolymerized with the aromatic vinyl compound(s) but includes, for example, the above-mentioned aliphatic olefins, alicyclic alkenes, dienes, vinyl ethers and β-pinene and like monomers. These may be used singly or two or more of them may be used in combination.

As the aliphatic hydrocarbon compound other than isobutylene which may be included in the polymer block (b2) in the aromatic vinyl-based thermoplastic elastomer (B), there may be mentioned aliphatic olefins other than isobutylene, and dienes, among others. It is to be noted that the term "aliphatic hydrocarbon compounds" as used herein further include, within the meaning thereof, alicyclic compounds such as alicyclic alkenes. Thus, as specific examples, there may be mentioned such compounds enumerated hereinabove as aliphatic olefins, alicyclic alkenes and dienes.

The polymer block (b2) the constituent monomer(s) of which is (are) an aliphatic hydrocarbon compound(s) other than isobutylene may or may not contain one or more other monomers than aliphatic hydrocarbon compounds. When the block (b2) contains a monomer(s) other than an aliphatic hydrocarbon compound(s), the proportion of the aliphatic hydrocarbon compound(s) in the whole polymer block (b2) is preferably not lower than 60% by weight, more preferably not lower than 80% by weight, so that the compatibility with the isobutylene-based polymer (A) in the resin composition may be increased. The monomer other than an aliphatic hydrocarbon compound but constitutes the polymer block (b2) is not particularly restricted but includes the above-mentioned vinyl ethers and like monomers.

The weight ratio between the polymer block (b2) and the polymer block (b1) in the aromatic vinyl-based thermoplastic elastomer (B) is not particularly restricted but the ratio (b2)/(b1) is preferably 95/5 to 50/50, more preferably 95/5 to 60/40. In particular, from the viewpoint of reducing the possibility of gravity deformation under high temperature conditions, a ratio of 85/15 to 65/35 is preferred.

The number average molecular weight of the aromatic vinyl-based thermoplastic elastomer (B) is not particularly restricted but preferably is 30, 000 to 300, 000. In particular, from the viewpoint of reducing the gravity deformation possibility under high temperature conditions and from the hot melt workability viewpoint, it is preferably 50, 000 to 150, 000. As mentioned hereinabove, the number average molecular weight, so referred to herein, is the value on the polystyrene equivalent basis as determined by gel permeation chromatography.

The proportion of the aromatic vinyl-based thermoplastic elastomer (B) in the resin composition according to the invention is not particularly restricted but preferably is 1 to 30 parts by weight, more preferably 5 to 20 parts by weight, per 100 parts by weight of the isobutylene-based polymer (A). When the proportion of the aromatic vinyl-based thermoplastic elastomer (B) is smaller, the effect of reducing the possibility of gravity deformation under high temperature conditions is insignificant and, when it is excessively high, the composition becomes excessively hard, possibly leading to decreases in adhesion, for example peeling at hot melt sealed sites.

The structure of the aromatic vinyl-based thermoplastic elastomer (B) is not particularly restricted but may be a block copolymer having a linear, branched or starlike structure, for instance. It may be a diblock, triblock or multiblock copolymer.

As the composition of the aromatic vinyl-based thermoplastic elastomer (B), there may be mentioned block copolymers comprising a styrenic block(s) and a butadiene and/or isoprene block(s) and hydrogenation products derived from such copolymers from the availability and high-temperature flowability viewpoint. More specific examples are SBSs (styrene-butadiene-styrene block copolymers), SISs (styrene-isoprene-styrene block copolymers), SEBSs (styrene-(ethylene/butylene)-styrene block copolymers), SEPSs (styrene-(ethylene/propylene)-styrene block copolymers), SEEPSs (styrene-[ethylene-(ethylene/propylene)]-styrene block copolymers and the like. Among these, SEBSs, SEPSs and SEEPSs are preferred.

The filler (C) is effective in improving the rigidity of the resin composition of the invention and is also effective in improving the shape retainability at temperatures during use and in preventing sagging during hot melt application. The filler (C) to be used is not particularly restricted but may be any of species known in the art. For example, use may be made of at least one member selected from the group consisting of calcium carbonate, magnesium carbonate, fused silica, crystalline silica, diatomaceous earth, clays, talc, mica, kaolin, titanium oxide, zinc oxide, carbon black, bentonite, aluminum hydroxide, magnesium hydroxide, barium sulfate, calcium sulfate and the like. Among these, calcium carbonate and carbon black are preferred, and carbon black, which is effective in rigidity improvement at low addition levels, is particularly preferred.

The level of addition of the filler (C) is not particularly restricted but preferably is 1 to 300 parts by weight, more preferably 50 to 150 parts by weight, per 100 parts by weight of the isobutylene-based polymer (A).

The composition according to the invention may further contain a moisture-absorbing compound (D). As the moisture-absorbing compound (D), there may be mentioned zeolite, silica gel and alumina, and these may be used singly or two or more of them may be used in combination. Such a moisture-absorbing compound reduces the water vapor permeability of the resin composition according to the invention and can prevent the space sandwiched between glass panels of the double glazing unit from being fogged by moisture. The level of addition of the moisture-absorbing compound (D) is preferably 1 to 100 parts by weight per 100 parts by weight the isobutylene-based polymer (A).

In the resin composition according to the invention, there may further be incorporated one or more of antioxidants, ultraviolet absorbers, light stabilizers, pigments, surfactants, flame retardants and so forth each at an appropriate addition level so long as the physical properties of the composition will not be sacrificed thereby. Such known antiblocking agents, antistatic agents, colorants, inorganic or organic antimicrobial agents and lubricants can also be incorporated.

The method of producing the resin composition according to the invention is not particularly restricted but, for example, use may be made of the method comprising mechanical kneading using a melting vessel equipped with a roll, Banbury mixer, kneader or stirrer or using a single-screw or twin-screw extruder. On that occasion, heating may be made according to need. It is also possible to use the method comprising preparing a uniform solution, followed by solvent removal by distillation.

As for the kneading conditions, the temperature should be not lower than the temperature at which the aromatic vinyl-based thermoplastic elastomer (B) melts but preferably is not higher than 260°C.

The resin composition of the invention can be further molded according to need using a molding method and molding apparatus generally employed for thermoplastic resin compositions, for example by extrusion molding, injection molding, press molding or blow molding.

The resin composition obtained in the above manner has high levels of elasticity and mechanical strength and shows only a slight extent of gravity deformation under high temperature conditions. On the other hand, on the occasion of application to the glass surface, namely when it is supposed that an applicator or coater is used, a shearing force operates and the composition flows with ease and, therefore, the composition can be suitably used as a sealant, in particular as a hot melt sealant for double glazing units, or as a hot melt spacer material for double glazing units

### (Effect of the invention)

The resin composition according to the invention undergoes only a slight extent of gravity deformation under high temperature conditions and is higher in elasticity and mechanical strength as compared with the conventional compositions. The resin composition according to the invention can be suitably used as a sealant required to show high levels of elasticity, mechanical strength, gas barrier properties, and the like, in particular as a hot melt sealant for double glazing units, or as a hot melt spacer material for double glazing units.

### BEST MODE FOR CARRYING OUT THE INVENTION

The following examples illustrate the present invention in further detail. These examples are, however, by no means limitative of the scope of the invention.
[Contents of the components described in the examples etc.] PIB: Polyisobutylene (product of BASF, product name: "Oppanol B12");
SEBS: Styrene-(ethylene/butylene)-styrene triblock copolymer (product of Kraton Japan, product name: "Kraton G1650");
SEPS: Styrene-(ethylene/propylene)-styrene triblock copolymer (product of Kuraray, product name: "Septon 2007"); SEEPS: Styrene-[ethylene-(ethylene/propylene)]-styrene triblock copolymer (product of Kuraray, product name: "Septon 4033");
Calcium carbonate (product of Shiraishi Calcium, product name: Softon 3200");
Carbon black (product of Asahi Carbon, product name: "Asahi Carbon #60HN");
Silica gel (product of Tosoh Silica, product name: "Nipgel CX200").

### [Method of testing for gravity deformation]

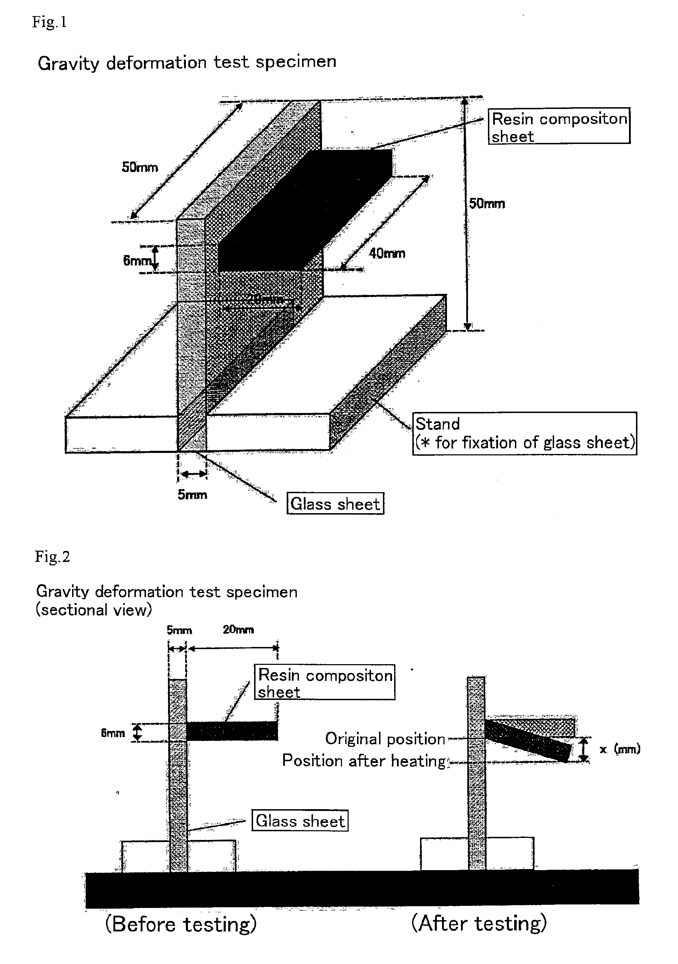

First, each resin composition obtained was molded into sheets (width 20 mm x length 40 mm x thickness 6 mm) using a mold and a press molding machine (temperature set at 180°C). A glass sheet (width 50 mm x length 50 mm x thickness 5 mm) was prepared and each test specimen sheet was caused to perpendicularly adhere to the glass surface, as shown in Fig. 1. The glass sheet with the test specimen sheet adhering thereto was fixed vertically relative to the ground using a stand and then allowed to stand in a hot air drying chamber at 120°C for 12 hours. After 12 hours of testing, the distance x (mm) of the position of the lower end of the test specimen sheet after heating from the original position was measured, as shown in Fig. 2. The gravity deformation was evaluated based on the distance x (mm) measured after the above heating test according to the following criteria.
Excellent: The distance x (mm) after the above heating test is shorter than 1 mm;
Fair: The distance x (mm) after the above heating test is not shorter than 1 mm but shorter than 3 mm;
Poor: The distance x (mm) after the above heating test is 3 mm or longer.

### [Method of tensile testing]

The test was performed according to JIS K 6251. Thus, 2.0-mm-thick mini-dumbbell test specimens were prepared and subjected to tensile testing. The rate of pulling was 500 mm/minute.

### (Example 1)

A resin composition was prepared by melt-kneading 90 parts by weight of an isobutylene-based polymer (product of BASF, Oppanol B12), 10 parts by weight of a styrene-(ethylene/propylene)-styrene triblock copolymer (SEPS, Septon 2007, product of Kuraray), 40 parts by weight of calcium carbonate (Softon 3200, product of Shiraishi Calcium), 50 parts by weight of carbon black (Asahi Carbon #60HN, product of Asahi Carbon) and 10 parts of silica gel (Nipgel CX200, product of Tosoh Silica) on a Labo Plastomill kneader (product of Toyo Seiki Seisakusho) at a temperature set at 170°C for 10 minutes.

### (Example 2)

A resin composition was prepared in the same manner as in Example 1 except that a styrene-[ethylene-(ethylene/propylene)]-styrene triblock copolymer (SEEPS, Septon 4033, product of Kuraray) was used as the aromatic vinyl-based thermoplastic elastomer (B), as shown in Table 1. This composition was evaluated for various physical characteristics by the methods described above. The results are shown in Table 1.

### (Example 3)

A resin composition was prepared in the same manner as in Example 1 except that a styrene- (ethylene/butylene) -styrene triblock copolymer (SEBS, Kraton G1650, product of Kraton Japan) was used as the aromatic vinyl-based thermoplastic elastomer (B), as shown in Table 1. This composition was evaluated for various physical characteristics by the methods described above. The results are shown in Table 1.

### (Comparative Example 1)

A resin composition was prepared in the same manner as in Example 1 except that the proportions of the isobutylene-based polymer (A) and aromatic vinyl-based thermoplastic elastomer (B) was varied, as shown in Table 1. This composition was evaluated for various physical characteristics by the methods described above. The results are shown in Table 1.

**Table 1**

| Component | Constituent | | Product name | Example 1 | Example 2 | Example 3 | Comparative Example 1 |
|---|---|---|---|---|---|---|---|
| (A) | Isobutylene-based polymer | Polyisobutylene | Oppanol B12 | 90 | 90 | 90 | 100 |
| (B) | Aromatic vinyl-based thermoplastic elastomer | SEPS | Septon 2007 | 10 | | | |
| | | SEEPS | Septon 4033 | | 10 | | |
| | | SEBS | Kraton G1650 | | | 10 | |
| (C) | Filler | Calcium carbonate | Softon 3200 | 40 | 40 | 40 | 40 |
| | | Carbon black | Asahi Carbon #60HN | 50 | 50 | 50 | 50 |
| (D) | Moisture-absorbing compound | Silica gel | Nipgel CX200 | 10 | 10 | 10 | 10 |
| Gravity deformation test(120°C) | | | | Excellent | Excellent | Excellent | Poor |
| Tensile strength (50% elongation)[MPa] | | | | 1.0 | 1.0 | 1.1 | 0.4 |

In Examples 1 to 3, improvements were achieved in gravity deformation behavior under high temperature conditions and no deformation was confirmed.

On the contrary, in Comparative Example 1 in which the aromatic vinyl-based thermoplastic elastomer (B) was not used, the gravity deformation under high temperature conditions was great and it was confirmed that the deformation amounted to at least 3 mm.

As for the tensile strength at 50% elongation, the strength values in Examples 1 to 3 were 1.0 to 1.1 MPa whereas, in Comparative Example 1, the value was 0.4 MPa; it is thus seen that Examples 1 to 3 are superior in mechanical strength.

As described hereinabove, the resin composition according to the invention is not only excellent in mechanical strength and elasticity but also is slight in gravity deformation at high temperatures, in particular. Such resin composition can be suitably used as a sealant, in particular as a hot melt sealant for double glazing units, and as a hot melt spacer material for double glazing units.

### INDUSTRIAL APPLICABILITY

The resin composition according to the invention can be suitably used as a sealant, in particular as a hot melt sealant for double glazing units, and as a hot melt spacer material for double glazing units.

### BRIEF DESCRIPTION OF THE DRAWINGS

[Fig. 1] This is a schematic representation of the constitution of the test specimen for gravity deformation testing.
[Fig. 2] This is a sectional view of the test specimen shown in Fig. 1.

## Claims

1. A resin composition
which comprises
an isobutylene-based polymer (A),
an aromatic vinyl-based thermoplastic elastomer (B) comprising a polymer block (b1) the constituent monomer of which is an aromatic vinyl compound and a polymer block (b2) the constituent monomer of which is an aliphatic hydrocarbon compound other than isobutylene, and
a filler (C).

2. The resin composition according to Claim 1
wherein the aromatic vinyl-based thermoplastic elastomer (B) has a number average molecular weight of 30, 000 to 300, 000.

3. The resin composition according to Claim 1 or 2
wherein the weight ratio (b2)/(b1) between the polymer block (b2) and polymer block (b1) in the aromatic vinyl-based thermoplastic elastomer (B) is 95/5 to 50/50.

4. The resin composition according to any one of Claims 1 to 3
wherein the aromatic vinyl-based thermoplastic elastomer (B) is a styrenic thermoplastic elastomer.

5. The resin composition according to any one of Claims 1 to 4
wherein the aromatic vinyl-based thermoplastic elastomer (B) comprises at least one species selected from the group consisting of styrene-(ethylene/propylene)-styrene triblock copolymers, styrene-(ethylene/butylene)-styrene triblock copolymers, and styrene-[ethylene-(ethylene/propylene)]-styrene triblock copolymers.

6. The resin composition according to any one of Claims 1 to 5
wherein the filler (C) comprises at least one species selected from the group consisting of calcium carbonate and carbon black.

7. The resin composition according to any one of Claims 1 to 6
which further comprises a moisture-absorbing compound (D).

8. The resin composition according to Claim 7
wherein the moisture-absorbing compound (D) comprises at least one species selected from the group consisting of silica gel, alumina and zeolite.

9. A sealant
which comprises the resin composition according to any one of Claims 1 to 8.

10. A hot melt sealant for double glazing units
which comprises the resin composition according to any one of Claims 1 to 8.

11. A hot melt spacer for double glazing units
which comprises the resin composition according to any one of Claims 1 to 8.
